# EUROPEAN PATENT SPECIFICATION

(11) **EP 2 492 224 B1**
(45) Date of publication and mention of the grant of the patent: **26.11.2014**
(21) Application number: 12156581.6
(22) Date of filing: 22.02.2012
(51) Int. Cl.: B65H 3/08, B21D 43/24

(54) **Device for loading flat elements, such as panels or the like, onto a machine tool**
Vorrichtung zum Beladen eines Maschinenwerkzeugs mit flachen Elementen, wie etwa Paneelen
Dispositif de chargement d'éléments plats, tels que des panneaux ou similaire, sur une machine-outil

(30) Priority: 23.02.2011 IT PC20110005
(43) Date of publication of application: 29.08.2012
(73) Proprietor: Samec S.p.A., 47899 Serravalle (SM)
(72) Inventor: Muratori, Sergio, 47899 SERRAVALLE (SM); Muratori, Andrea, 47899 SERRAVALLE (SM); Muratori, Antonio, 47899 SERRAVALLE (SM)
(74) Representative: Fisauli, Beatrice A. M.

(56) References cited:
- EP-A2- 0 744 363
- WO-A1-02/094660
- US-A- 1 480 012

## Description

The present invention relates to a device for loading flat elements, such as panels or sheets, onto a machine tool.

More in particular, the invention relates to a device for loading panels or sheets onto a vertical machining centre.

In the machine tool sector there are known machining centres called "verticals" or vertical panel saws, as they are provided with a substantially vertical table, i.e. almost perpendicular to the ground.

Machine tools of this type are advantageous in some applications as they allow reduced overall dimensions of the surface area of the machine and at the same time optimal access to the work area by the operator.

These machines thus configured are used in particular to machine flat elements, such as panels or sheets, made of different materials, such as wood, metal or composite materials.

In particular, these latter, the composite panels, are used more and more widely in a variety of sectors, from building to furnishing, due to their ability to take advantage of the good qualities of the single combined materials.

A very significant example on the market is represented by composite panels, a few millimetres thick, constituted by a core made of plastic material enclosed between two metal sheets (aluminium or steel), which are used today to produce furniture, domestic appliances, but also for whole facades or buildings or for signs. According to needs, a series of machining operations are performed on these panels to obtain the finished product required.

Typical machining operations are, for example, cutting, contour milling, slot milling and boring, and can be obtained by machining centres with interpolation of the axes, such as those described above.

These panels in general have at least one "good" face, i.e. with a more prestigious aesthetic finish than the other, which remains visible in the finished product, and an opposite face with a less prestigious finish on which the aforesaid machining operations are performed.

To perform these machining operations the panel is therefore positioned with said "good" face in contact with the "vertical" table where a machining head with three or more axes operates the tools that machine the opposite face by stock removal. In fact, these panels are generally supplied by the manufacturers in stacks of a few tens of pieces on specific pallets, which are placed on the ground in proximity of the machining area.

Due to production needs, and more in detail to facilitate quality controls, they are always stacked with the "good" face, i.e. the face that is to be placed on the table, facing upward.

Therefore, this condition prevents the use of a conventional handler, as the only accessible face, by which the panel could be gripped, i.e. the one facing upward, is the same one that must subsequently be placed onto the table of the machine. Therefore, the presence of the handler would interfere during placing of the panel on said table.

For these reasons this operation is currently performed manually by two or more operators who pick up one panel at a time from the prepared stack and place it in position on the table.

However, these panels, above all in building applications, can reach dimensions greater than 3 metres in length and 1.6 metres in height, with a weight of over 30 kilograms.

In these cases, the handling and loading operations are difficult and require action by at least two or more operators.

Moreover, due to the high flexibility of the materials often there is the risk of deforming the panel, of damaging the "good" face following knocks or the like, or of injury to operators during loading.

WO-02/094660 discloses a device for loading flat elements according to the preamble of claim 1, with means for moving the stack vertically so that the upper element of the stack remains at a constant position regardless of the height of the stack.

In this context, the object of the present invention is to propose a device for loading flat elements, such as particular panels or sheets, onto a machine tool, which overcomes the drawbacks of prior art.

In detail, the object of the invention is to propose a device for loading flat elements, in particular panels, onto a vertical machining centre, which allows manual operations by the operator to be minimized.

In particular, the object of the present invention is to propose an automated device capable of picking up a panel from a prepared stack and arranging it for loading onto the table of the machine tool.

A further object of the present invention is to propose a device that allows a single operator to manage operations to load panels onto the machine tool, without exerting any physical effort and without any risks.

These specified objects are substantially achieved by a device for loading flat elements, such as panels or the like, onto a table of a machine tool comprising a support structure defining a supporting surface substantially parallel to said table of the machine, at least one arm provided with pick-up means adapted to pick up a panel from a stack of prepared panels, said arm being pivoted on a bracket, actuator means adapted to rotate said arm from a pick-up position, where it grips the panel by a first face facing upward, to a release position where it positions said panel with said first face on said supporting surface, there being provided means adapted to vary the height of said bracket to vary the height of said at least one arm in the pick-up position as the height of the stack of panels varies.

In this way, said at least one arm can always be located in a position substantially parallel to said first surface of the panel in said pick-up position to allow the pick-up means to grip said panel perfectly.

In detail, said means comprise a support provided with an actuator connected to said bracket and movable along a substantially vertical direction in such a manner as to vary the height thereof with respect to the ground.

According to the invention, there are also provided support means adapted to support the panel in the release position.

Said support means comprise, for example, at least one pair of pins projecting beyond the supporting surface and movable parallel thereto from an idle position, in which they allow the panel to rest on said surface, to an operating position, where they are carried into contact with a lower edge of the panel to support it.

In this way, once the panel is supported by said supports the pick-up means can be deactivated to release the grip and allow the panel to be taken to the height of the lower stops of the table of the machine.

For this purpose, said support means are provided with sliding means adapted to allow sliding of said panel from said supporting surface of the device to the table of the machine tool without any difficulty and without any effort.

Further characteristics and advantages will be more apparent from the indicative, and therefore non-limiting, description of an example of a preferred but not exclusive embodiment of the invention, as shown in the accompanying figures wherein:
- Fig. 1 is a perspective view of a device for loading flat elements onto a machine tool, according to the invention;
- Fig. 2 is a side view of the device of Fig. 1 in the position to pick up the panel;
- Fig. 3 is a side view of the device of Fig. 1 during lifting of the panel;
- Figs. 4a and 4b are further side views of the device of Fig. 1 in the release position;
- Fig. 5 is a perspective view of the device of Fig. 1 during loading of the panel onto the table of the machine;

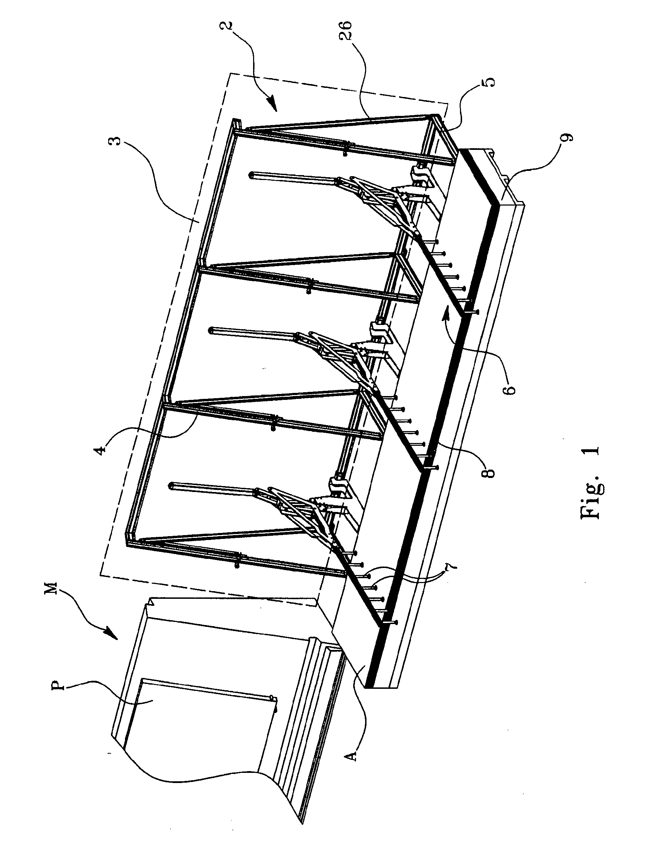

With reference to the accompanying Fig. 1, the device for loading flat elements onto a machine tool, indicated as a whole with 1, comprises a support structure 2 which defines a supporting surface 3 substantially parallel to a table P of a machine tool M.

In detail, said machine tool is a vertical machining centre in which the table P is inclined by an angle generally between 95 ° and 125°with respect to the ground on the side of the work area, i.e. for loading the panel.

Said device according to the invention is designed to be placed side by side with the machine tool, as shown in the figure, in such a manner that said supporting surface 3 is substantially parallel to and coplanar with the table P of the machine. Said support structure 2 preferably comprises at least one pair of uprights 4, mutually parallel, lying on a plane coincident with said supporting surface 3, i.e. inclined with respect to the ground by an angle between 95 ° and 125°.

According to a preferred embodiment, said support structure comprises a framework structure with a base 5 and a plurality of uprights 4.

More preferably, said uprights are supported by the same number of struts 26 connected to said base 5.

According to the invention, there is provided at least one arm 6 provided with pick-up means 7 adapted to pick up a panel 8 from a stack of panels 9 arranged in front of said loading device.

In the example of embodiment shown said pick-up means 7 are constituted by a plurality of vacuum suction cups 7a connected to a vacuum device, such as a vacuum pump or a Venturi type suction system, not visible in the figure, adapted to produce a vacuum required for their grip.

The arm 6 is instead constituted by a hollow profile 6a in fluid connection both with said vacuum suction cups 7a and with said vacuum device, in such a manner as to act as a duct for the passage of air.

A second portion 6b of the arm instead allows connection to actuation means described below.

As described above, the stack 9 of panels generally comprises a few tens of panels a few millimetres thick which are stacked in such a manner as to have a first face A facing upward.

Said face A represents the face of the panel with the more prestigious aesthetic finish, which generally remains visible in the finished product, and on which no machining operations are performed.

A second opposite face B of the panel is instead obviously facing downward when it is stacked.

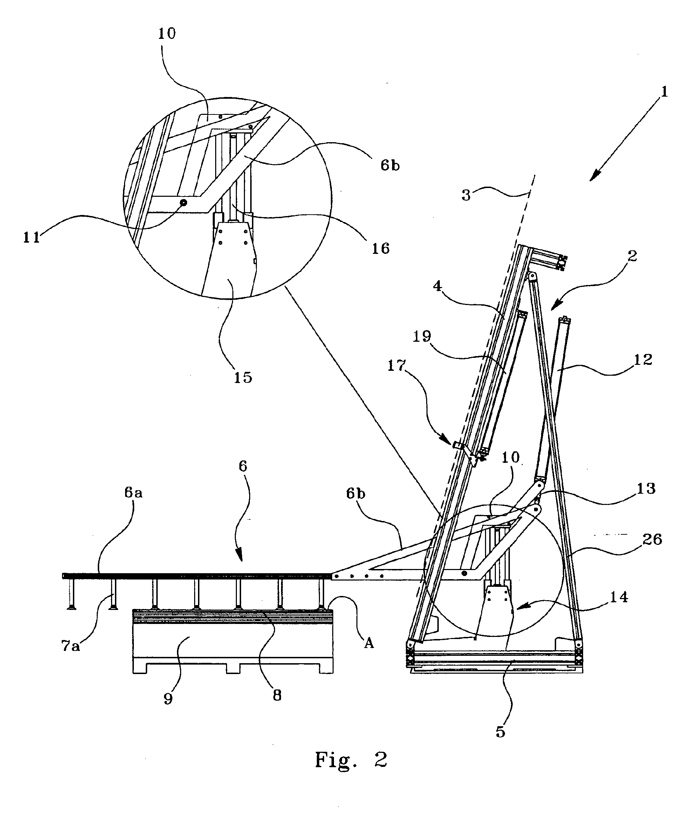

Said vacuum suction cups 7a, after being carried into contact with said surface A of the panel, as a result of the vacuum created by the vacuum device, retain the panel allowing the arm to perform the pick-up and lifting operation, as can be seen in Fig. 2.

The vacuum suction cups 7a are arranged in such a manner as to serve a given surface of a panel, corresponding roughly to the maximum dimension allowed by the table P of the machine.

Preferably, at least some of said vacuum suction cups 7a are provided with a valve connected to a feeler adapted to open the passage for suction of air only when these are in contact with a surface and said feeler is activated.

Preferably, said vacuum suction cups provided with said valve are located in the outermost part of the effective pick-up area of the panel.

In this way, in the case in which the panel to be picked up has a smaller surface than the maximum surface area, the vacuum suction cups 7a that do not come into contact with the surface A thereof are automatically excluded, in such a manner that the pneumatic circuit is in any case closed to obtain the vacuum on the other vacuum suction cups in contact with the panel.

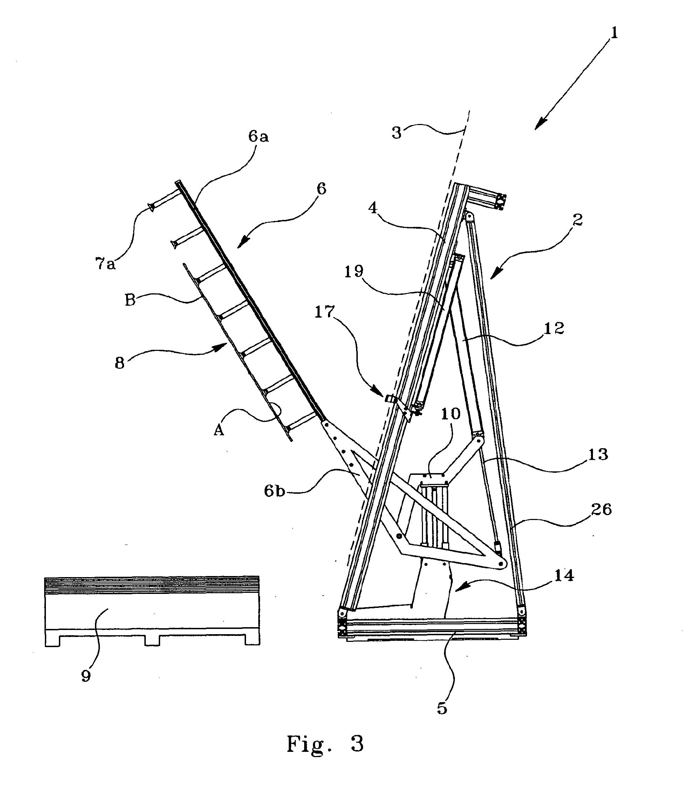

With reference to Figs. 2 to 4, said at least one arm 6 is pivoted to a bracket 10, in turn connected to the ground or to the support structure 2, in such a manner as to be able to rotate about a point of rotation 11 to move the panel.

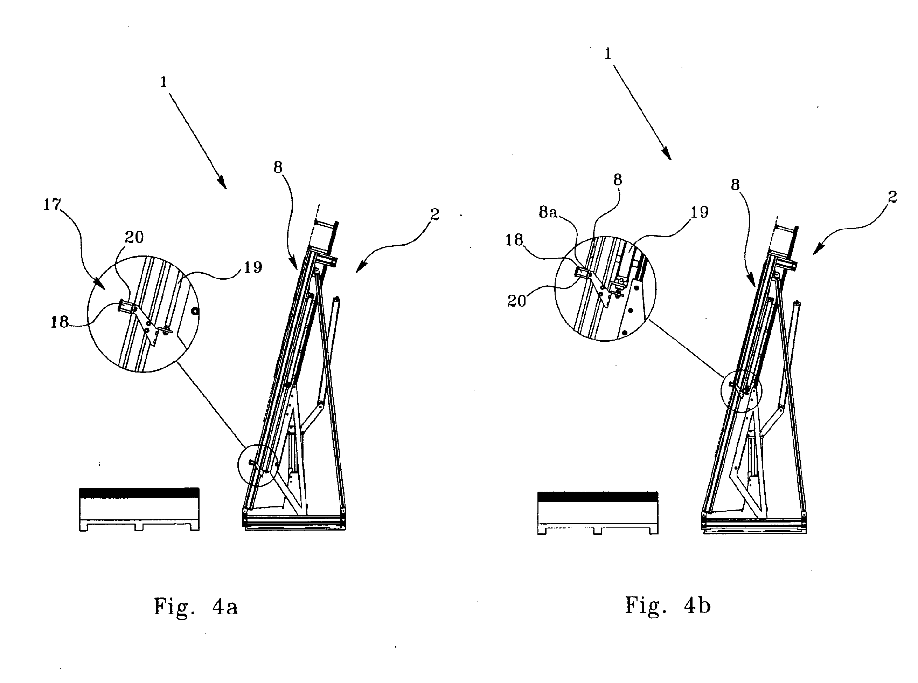

Actuator means 12 are adapted to rotate said arm 6 from a pick-up position (Fig. 2) where the pick-up means 7 grip the panel 8 on said first face A, to a release position (Figs. 4a and 4b) where said panel is carried with said first face A to the supporting surface 3 of the structure 2, i.e. against the uprights 4.

Preferably, there are provided at least one pair of arms 6, in such a manner as to maintain the panel 8 balanced at all times during movement, and more preferably four arms 6, in such a manner as to allow uniform distribution of the vacuum suction cups 7a mounted on each arm in an effective pick-up area.

Preferably, said arms 6 and the related brackets 10 are provided movable along a transverse direction to vary the distance between one arm and the other and thus adapt them to the dimension of the panel.

The actuator means preferably comprise at least one actuator 12, for example a pneumatic or hydraulic cylinder or an electromechanical actuator, provided with a fixed portion (for example the sleeve of a pneumatic cylinder) mounted on said bracket 10 and with a movable portion 13 (for example the piston of a pneumatic cylinder) connected directly or indirectly to one end of each arm 6, more preferably to the second portion 6b.

In the pick-up position the arms 6 are carried by said actuator means to a position substantially parallel to the surface of the panel on the stack 9 in such a manner that the vacuum suction cups 7a are pressed in the same manner onto the surface thereof.

Preferably, the suction system is already activated during descent of the arms 6 toward the panel; when the active vacuum suction cups come into contact with the surface of the panel, closing the circuit, a sensor detects contact with the stack (which coincides with the pick-up position of the panel) and controls the actuators 12 for ascent toward the supporting surface 4.

To ensure that the arms 6 are always parallel to the panel to be picked up in the pick-up position, according to the invention there are provided means, indicated as a whole with 14, adapted to vary the height of the bracket 10, i.e. the height of the centre of rotation 11 of the arm 6, as the height of the stack 9 varies.

Said means according to a preferred embodiment comprises a support 15 mounted on the base 5 or resting directly on the ground on which the bracket 10 is mounted.

Said support 15 is provided with an actuator 16 connected to the bracket 10 and movable along a substantially vertical direction in such a manner as to vary the height of said bracket 10 with respect to the ground.

Said actuator 16 can, for example, be a pneumatic or hydraulic cylinder or an electromechanical system, such as an electric motor coupled with a rack and pinion gear.

Preferably, said supports 15 are mounted on the base 5, or on the ground, in such a manner as to be able to slide transversely, so as to vary the distance between one arm and the next and adapt the device to the dimension of the panel to be lifted.

As already mentioned, the arms 6, after having gripped the panel, rotate until it is carried to the supporting surface 3, i.e. against the uprights 4 of the structure 2 (Fig. 4a).

According to the invention, there are provided support means, indicated as a whole with 17, adapted to support the panel in this release position where the pick-up means 7 are deactivated.

In detail, said means comprise at least one pair of pins 18 mounted on the uprights 4 of the structure 2, in such a manner as to project beyond the supporting surface 3 and thus act as a support for the panel (Figs. 4a and 4b.

In detail, said pins are provided movable parallel to the supporting surface 3 along a substantially vertical direction, i.e. along the axis of these uprights, from an idle position in which they are preferably positioned in the lower part of the upright allowing the panel to rest on the supporting surface 3 (fig. 4a), to an operating position in which there are carried into contact with the lower edge 8a of the panel 8 to support it (Fig. 4b).

In a preferred embodiment, said pins 18 are connected to the same number of actuators 19, mounted integral on the uprights, able to make them slide along the axis of the upright from said idle position to said operating position.

Once the pins 18 come into contact with the lower edge 8a of the panel 8, a sensor positioned on said actuator sends a signal to the suction system, which deactivates the vacuum suction cups 7a.

In this the device is very flexible, as it can be adapted to panels of various heights which, understandably, would have different positioning, and in particular of the lower edge 8a, in the position of release on the supporting surface 3.

Moreover, the system thus configured allows the stack 9 of panels to be placed in proximity of the device without requiring very precise positioning.

In fact, any differences of a few centimetres (5-10 centimetres) are recovered through said movable support means.

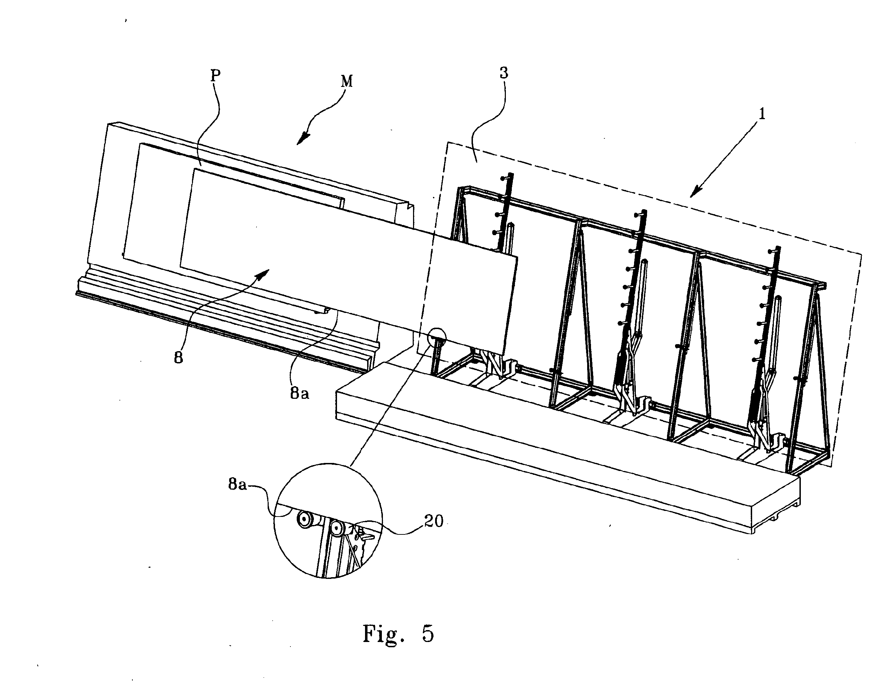

As a result of the coplanarity between the supporting surface 3 of the device and the table P of the machine tool, loading of the panel can take place by drawn the panel laterally on said pins until it is loaded onto said table P (Fig. 5).

Said drawing can be performed manually by the operator or, alternatively, by an automatic device such as an actuator, able to push the panel from the supporting surface 3 onto the table P.

In detail, the operation is simplified as a result of the movable pins 18 which are positioned by the actuators 19 in such a manner that the lower edge 8a of the panel is located substantially at the same height as a lower stop of the table of the machine tool.

According to a preferred embodiment, said pins are also provided with sliding means 20, such as wheels, bearings or the like, which facilitate sliding of the panel onto the table of the machine.

As a result of the present invention it is therefore possible to produce a device that allows flat elements such as sheets or panels to be picked up and moved from a prepared stack, to be loaded onto a machine tool.

The device as configured can operate with panels of various formats without the need for any modifications and without requiring action by the operator. Therefore, the almost totally automated system allows a single operator to load the panel onto the table of the machine without any difficulty and without any effort.

## Claims

1. A device for loading flat elements, such as panels or the like, onto a table (P) of a machine tool comprising a support structure (2) defining a supporting surface (3) substantially parallel to said table (P) of the machine, at least one arm (6) provided with pick-up means (7) adapted to pick up a panel (8) from a stack (9) of prepared panels, said arm (6) being pivoted on a bracket (10), actuator means (12) adapted to rotate said arm (6) from a pick-up position, where it grips the panel (8) by a first face (A) facing upward, to a release position where it positions said panel with said first face (A) on said supporting surface (3), **characterised by** means (14) adapted to vary the height of said bracket (10) to vary the height of said at least one arm (6) in the pick-up position as the height of the stack (9) of panels varies.

2. The device for loading flat elements onto a machine tool according to claim 1, **characterized in that** said means (14) comprise a support (15) provided with an actuator (16) connected to the bracket (10) and movable along a substantially vertical direction in such a manner as to vary the height of said bracket (10) with respect to the ground.

3. The device for loading flat elements onto a machine tool according to claim 1 or 2, **characterized in that** it is provided with support means (17) adapted to support said panel (8) in said release position.

4. The device for loading flat elements onto a machine tool according to claim 3, **characterized in that** said support means (17) comprise at least one pair of pins (18) projecting beyond the supporting surface (3) and movable parallel to said supporting surface (3) from an idle position in which they allow the panel to rest on the supporting surface (3) to an operating position where they are carried into contact with a lower edge (8a) of the panel (8) to support it.

5. The device for loading flat elements onto a machine tool according to claim 4, **characterized in that** said support means (17) are provided with sliding means (20) adapted to allow sliding of said panel (8) from said supporting surface (3) to said table (P) of the machine tool.

6. The device for loading flat elements onto a machine tool according to any one of the preceding claims, **characterized in that** said support structure (2) comprises a plurality of uprights (4) mutually parallel and inclined with respect to the ground by an angle between 95° and 125°.

7. The device for loading flat elements onto a machine tool according to claims 3 and 6, **characterized in that** said support means (17) are movable along the axis of said uprights (4), there being provided actuators (19) adapted to make them slide along said axis of the upright from said idle position to said operating position.

8. The device for loading flat elements onto a machine tool according to any one of the preceding claims, **characterized in that** said pick-up means (7) comprise a plurality of vacuum suction cups (7a) mounted on said at least one arm (6) and connected to a vacuum device.

9. The device for loading flat elements onto a machine tool according to claim 8, **characterized in that** it is provided with a plurality of arms (6), said arms (6) comprising a hollow profile in fluid connection both with said vacuum suction cups (7a) and with said suction system, in such a manner as to act as a duct for the passage of air.

10. The device for loading flat elements onto a machine tool according to claim 8, **characterized in that** said vacuum suction cups (7a) are provided with a valve connected to a feeler adapted to open the passage for suction of air only when these are in contact with a surface of the panel so that said feeler is activated.

## Patentansprüche

1. Vorrichtung zum Beladen einer Arbeitsplatte (P) einer Werkzeugmaschine mit flachen Elementen, wie Paneelen und dgl., umfassend eine Trägervorrichtung (2), die eine zur Arbeitsfläche (P) der Werkzeugmaschine im Wesentlichen parallele Auflagefläche (3) bildet, mindestens einen Arm (6), der mit geeigneten Greifmitteln (7) zum Entnehmen eines Paneels (8) aus einem bereitgestellten Stapel (9) von Paneelen ausgerüstet ist, wobei der Arm (6) auf einem Bügel (10) drehbar gelagert ist, geeignete Antriebsmittel (12) zum Drehen des Armes (6) aus einer Greifposition, in der er das Paneel (8) von einer ersten nach oben gerichteten Seite (A) ergreift, in eine Freigabeposition, in der er das Paneel mit der ersten Seite (A) auf die Auflagefläche (3) positioniert, wobei geeignete Mittel (14) für die Höheneinstellung des Bügels (10) vorgesehen sind, um die Höhe von mindestens einem Arm (6) in der Greifposition zu variieren, sobald die Höhe des Stapels (9) der Paneele variiert.

2. Vorrichtung zum Beladen einer Werkzeugmaschine mit flachen Elementen nach Anspruch 1, **dadurch gekennzeichnet, dass** die Mittel (14) eine Halterung (15) umfassen, die mit einer mit dem Bügel (10) verbundenen Antriebsvorrichtung (16) ausgerüstet und beweglich entlang einer im Wesentlichen vertikalen Richtung ist, sodass die Höhe des Bügels (10) zum Boden variiert.

3. Vorrichtung zum Beladen einer Werkzeugmaschine mit flachen Elementen nach Anspruch 1 oder 2, **dadurch gekennzeichnet, dass** geeignete Halterungsmittel (17) zum Festhalten des Paneels (8) in der Freigabeposition vorgesehen sind.

4. Vorrichtung zum Beladen einer Werkzeugmaschine mit flachen Elementen nach Anspruch 3, **dadurch gekennzeichnet, dass** die Halterungsmittel (17) mindestens ein Paar Bolzen (18) umfassen, die von der Auflagefläche (3) hervorragen und parallel zur Auflagefläche (3) beweglich sind von einem Ruhezustand, in dem sie das Aufliegen des Paneels auf der Auflagefläche (3) ermöglichen zu einer Arbeitsposition, in der sie in Berührung mit einem unteren Rand (8a) des Paneels gebracht werden, um dieses zu stützen.

5. Vorrichtung zum Beladen einer Werkzeugmaschine mit flachen Elementen nach Anspruch 4, **dadurch gekennzeichnet, dass** die Halterungsmittel (17) mit geeigneten Gleitvorrichtungen (20) ausgerüstet sind, die das Gleiten des Paneels (8) von der Auflagefläche (3) zur Arbeitsplatte (P) der Werkzeugmaschine ermöglichen.

6. Vorrichtung zum Beladen einer Werkzeugmaschine mit flachen Elementen nach einem beliebigen der vorhergehenden Ansprüche, **dadurch gekennzeichnet, dass** die Trägervorrichtung (2) eine Mehrzahl von zueinander parallelen und zum Boden in einem Winkel zwischen 95° und 125° geneigten Ständern (4) umfasst.

7. Vorrichtung zum Beladen einer Werkzeugmaschine mit flachen Elementen nach den Ansprüchen 3 und 6, **dadurch gekennzeichnet, dass** die Halterungsmittel (17) beweglich entlang der Achse der Ständer (4) sind, insofern geeignete Antriebsvorrichtungen (19) vorgesehen sind, um sie entlang der Achse des Ständers aus der Ruheposition in die Arbeitsposition zu verschieben.

8. Vorrichtung zum Beladen einer Werkzeugmaschine mit flachen Elementen nach einem beliebigen der vorhergehenden Ansprüche, **dadurch gekennzeichnet, dass** die Greifmittel (7) eine Mehrzahl von Vakuumsauger (7a) umfassen, die auf den mindestens einen Arm (6) montiert und an eine Vakuumvorrichtung angeschlossen sind.

9. Vorrichtung zum Beladen einer Werkzeugmaschine mit flachen Elementen nach Anspruch 8, **dadurch gekennzeichnet, dass** eine Mehrzahl von Armen (6) vorgesehen sind, wobei die Arme (6) ein Hohlprofil umfassen, das sowohl mit den Vakuumsaugern (7a) als auch mit dem Absaugsystem in Fluidverbindung steht, sodass es als Leitung für den Luftdurchzug dient.

10. Vorrichtung zum Beladen einer Werkzeugmaschine mit flachen Elementen nach Anspruch 8, **dadurch gekennzeichnet, dass** die Vakuumsauger (7a) mit einem an einen Fühler angeschlossenen Ventil ausgerüstet sind, der in der Lage ist, den Durchgang für die Luftabsaugung nur dann zu öffnen, wenn diese mit einer Oberfläche des Paneels in Berührung sind, sodass der Fühler aktiviert wird.

## Revendications

1. Dispositif pour le chargement d'éléments plats, comme des panneaux ou similaires, sur un plan de travail (P) d'une machine-outil comprenant une structure de support (2) qui définit un plan d'appui (3) substantiellement parallèle au dit plan de travail (P) de la machine, au moins un bras (6) doté de moyens de saisie (7) permettant de prélever un panneau (8) à partir d'une pile (9) de panneaux préparée, ledit bras (6) étant fixé par charnière sur une équerre (10), des moyens d'actionnement (12) permettant de faire pivoter ledit bras (6) entre une position de saisie, où il saisit le panneau (8) par une première face (A) tournée vers le haut, et une position de libération où il positionne ledit panneau avec ladite première face (A) sur ledit plan d'appui (3), **caractérisé par** des moyens (14) permettant de modifier la hauteur dudit étrier (10) pour modifier la hauteur dudit au moins un bras (6) dans la position de saisie au fur et à mesure que la hauteur de la pile (9) de panneaux change.

2. Dispositif pour le chargement d'éléments plats sur une machine-outil, selon la revendication 1, **caractérisé par le fait que** lesdits moyens (14) comprennent un support (15) doté d'un actionneur (16) raccordé à l'étrier (10) et mobile le long d'une direction substantiellement verticale de manière à modifier la hauteur dudit étrier (10) par rapport au sol.

3. Dispositif pour le chargement d'éléments plats sur une machine-outil, selon la revendication 1 ou 2, **caractérisé par le fait qu'**il prévoit des moyens de support (17) permettant de soutenir ledit panneau (8) dans ladite position de libération.

4. Dispositif pour le chargement d'éléments plats sur une machine-outil, selon la revendication 3, **caractérisé par le fait que** lesdits moyens de support (17) comprennent au moins une paire de goujons (18) qui dépassent du plan d'appui (3) et sont mobile parallèlement audit plan d'appui (3) entre une position de repos dans laquelle ils permettent au panneau de s'appuyer sur le plan d'appui (3) et une position de travail où ils sont portés en contact avec un bord inférieur (8a) du panneau (8) pour le soutenir.

5. Dispositif pour le chargement d'éléments plats sur une machine-outil, selon la revendication 4, **caractérisé par le fait que** lesdits moyens de support (17) sont dotés de moyens coulissants (20) permettant le coulissement dudit panneau (8) entre ledit plan d'appui (3) et ledit plan de travail (P) de la machine-outil.

6. Dispositif pour le chargement d'éléments plats sur une machine-outil, selon l'une des revendications précédentes, **caractérisé par le fait que** ladite structure de support (2) comprend une multitude de montants (4) parallèles entre eux et inclinés par rapport au sol selon un angle compris entre 95° et 125°.

7. Dispositif pour le chargement d'éléments plats sur une machine-outil, selon les revendications 3 et 6, **caractérisé par le fait que** lesdits moyens de support (17) sont mobiles le long de l'axe desdits montants (4), puisque des actionneurs (19) sont prévus pour les faire coulisser le long dudit axe du montant entre ladite position de repos et ladite position de travail.

8. Dispositif pour le chargement d'éléments plats sur une machine-outil, selon l'une des revendications précédentes, **caractérisé par le fait que** lesdits moyens de saisie (7) comprennent une multitude de ventouses à dépression (7a) montées sur ledit au moins un bras (6) et raccordées à un dispositif pour le vide.

9. Dispositif pour le chargement d'éléments plats sur une machine-outil, selon la revendication 8, **caractérisé par le fait qu'**il prévoit une multitude de bras (6), lesdits bras (6) comprenant un profilé creux en connexion de fluide soit avec lesdites ventouses à dépression (7a) soit avec ledit système d'aspiration, de manière à servir de conduit pour le passage de l'air.

10. Dispositif pour le chargement d'éléments plats sur une machine-outil, selon la revendication 8, **caractérisé par le fait que** lesdites ventouses à dépression (7a) sont dotées d'une soupape raccordée à un palpeur permettant d'ouvrir le passage pour l'aspiration de l'air uniquement lorsque celles-ci sont en contact avec une surface du panneau de sorte que ledit palpeur soit actionné.
